**Europäisches Patentamt**

**European Patent Office**

**Office européen des brevets**

(19)

(11) Veröffentlichungsnummer: **0 105 054**
**B1**

(12) **EUROPÄISCHE PATENTSCHRIFT**

(45) Veröffentlichungstag der Patentschrift:
**04.02.87**

(51) Int. Cl.⁴: **F 16 P 3/08,** H 01 H 47/00

(21) Anmeldenummer: **82109091.7**

(22) Anmeldetag: **01.10.82**

(54) Schaltungseinrichtung zur aktiven Kontrolle von paarig angeordneten Endschaltern.

(43) Veröffentlichungstag der Anmeldung:
**11.04.84 Patentblatt 84/15**

(45) Bekanntmachung des Hinweises auf die Patenterteilung:
**04.02.87 Patentblatt 87/6**

(84) Benannte Vertragsstaaten:
**AT BE CH DE FR GB IT LI LU NL SE**

(56) Entgegenhaltungen:
**DE-A-2 200 711**
**FR-A-2 314 606**
**GB-A-1 066 338**
**US-A-3 464 291**
**US-A-3 857 067**

(73) Patentinhaber: **Square D Starkstrom GmbH, D-5277 Marienheide- Rodt (DE)**

(72) Erfinder: **Stahl, Kurt, Am Krusenberg 7, D-5270 Gummersbach 1 (DE)**

(74) Vertreter: **Köhne, Friedrich, Dipl.- Ing., Postfach 250265 Lothringer Strasse 81, D-5000 Köln 1 (DE)**

# 0 105 054

## Beschreibung

Die Erfindung betrifft eine Schaltungseinrichtung zur aktiven Kontrolle von paarig angeordneten Endschaltern, welche der statischen oder dynamischen Überwachung von Absicherungseinrichtungen an Gefahrenstellem, wie Schutzgitter, mechanische Abschirmungen, Barrieren od. dgl, dienen, wobei die beiden Endschalter, ein Relais mit definierter Abfallverzugszeit und weitere Relais zwischen Versorgungsleitungen derart geschaltet sind, daß die Relais den ausgang nur dann durchschalten, wenn beide Endschalter innerhalb der Abfallverzugszeit betätigt sind.

Eine Sicherheitsschaltung zur Steuerung und Überwachung des Arbeitsablaufs an Pressen, Stanzen od. dgl. mit den technischen vorerläuterten Merkmalen ist aus der DE-A-2 200 711 bekannt. Diese Sicherheitsschaltung arbeitet mit einer Zweihandeinrückung, wobei eine Redienungsperson zwei Taster innerhalb einer abfallverzögerten Zeit eines Relais betätigen muß. Außerdem sind unter anderem zwei Endschalter vorgesehen, welche zwei Relais einschalten, die ihrerseits Wechselkontakte umschalten und mit einem weiteren abfallverzögerten Relais zusammenwirken. Die beiden Relais und das abfallverzögerte Relais sind sämtlich nahe der einen Stromversorgungsleitung vorgesehen.

Des weiteren ist aus der FR-A-2 314 606 ein Sicherheitssystem für Mikrowellenherde mit wechselschaltern bekannt.

Bei der Erfindung ist von einer anderen, und zwar der folgenden Überlegung ausgegangen worden, nämlich daß die zuvor genannten an sich bekannten Endschalter in der Regel nicht zyklisch mit jedem Arbeitsgang der Maschine ihren betätigten und unbetätigten Zustand ändern. In der Praxis verläßt man sich jedoch darauf, daß sie sich im Gefahrenfall elektrisch genau so verhalten, wie es der mechanischen Betätigung entspricht und daß beim Öffnen beispielsweise eines Schutzgitters die Endschalter die Maschine, die einen gefährlichen Arbeitsgang verkörpert, sofort in den sicheren Ruhestand versetzen. Das geschieht jedoch nur dann mit Gewißheit, wenn die Endschalter ständig auf ihre elektrische Funktion hin kontrolliert werden.

Demgemäß liegt der Erfindung die Aufgabe zugrunde, eine Schaltungseinrichtung zu schaffen, welche eine ständige Überwachung der Funktiontüchtigkeit der Endschalter, der Relais und der Leitungen gegen überbrückung, Unterbrechung oder gar Manipulation gestattet.

Die gestellte Aufgabe wird erfindungsgemäßdadurch gelöst, daß der eine Endschalter und das eine Relais schaltungsmäßig nahe der einen Versorgungsleitung und der andere Endschalter und das andere Relais nahe der anderen Versorgungsleitung vorgesehen sind, daß jeder Endschalter einen Öffnerkontakt und einen Schließerkontakt aufweist, und daßdiese Öffner- und Schließerkontakte derart geschalter ein Potentialwechsel in bezug auf das Relais mit der definierten Abfallverzugszeit stattfindet.

Der wesentlichen Vorteil dieser Schaltungseinrichtung besteht also darin, daß jeweils ein Potentialwechsel stattfindet, der sich durch die Abfallverzugszeit des betreffenden Relais schaltungsmäßig nicht bemerkbar macht. Die Potentialwechsel sind aber entscheidend einmal für die Kurzschlußempfindlichkeit der Endschalter im Fehlerfall, ferner für die Selbsthaltefähigkeit der den Endschaltern zugeordneten Relais während des Betriebs, außerdem für die Kontrolle der Abfallverzu gszeit des besagten Relais und schließlich für die Fehlerbetrachtung, nämlich ungewollte externe Verbindungen.

Vorteilhafte Ausgestaltungen der erfindungsgemäßen Schaltungseinrichtung ergeben sich aus den Unteransprüchen.

In der Zeichnung ist ein Ausführungsbeispiel der Erfindung im Schema dargestellt, und zwar zeigen

Figur 1 einen Schaltplan und

Figur 2 einen weiteren Schaltplan, der die praktische Anwendung der Schaltung nach Figur 1 veranschaulicht.

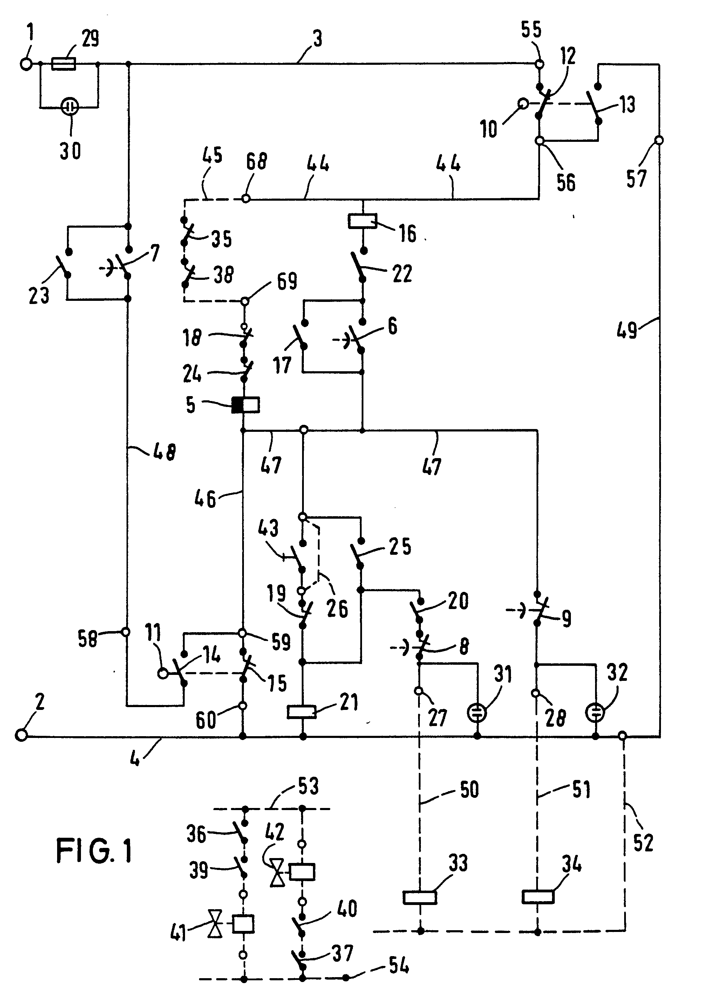

Figur 1 veranschaulicht ein Ausführungsbeispiel einer elektrischen Schaltung mit selbstgesicherten Schaltkreisen. Die Schaltung ist wie folgt aufgebaut. Mit den Bezugszeichen 1 und 2 sind die Anschlüsse für die elektrische Versorgungsspannung zu den Versorgungsleitungen 3 und 4 bezeichnet. An die Versorgungsleitungen ist sin Relais 5 mit definierter Abfallverzugszeit, die vorzugsweise 0,5 Sek. oder gegebenenfalls auch etwa 0,3 Sek. beträgt, angeschlossen. Das Relais 5 enthält die Kontakte 6, 7, 8 und 9, wobei die Kontakte 6 und 7 als Schließerkontakte und die Kontakte 8 und 9 als Öffnerkontakte ausgebildet sind, d.h. in Ruhelage, bei der noch keine Versorgungsspannung an den Anschlüssen 1 und 2 angelegt ist, befinden sich die Kontakte in der in Figur 1 dargestellten Stellung, so daß die Kontakte 6 und 7 bei Betätigung schließen, während die Kontakte 8 und 9 bei Betätigung des Relais 5 öffnen.

Die Schaltung enthält ferner zwei Endschalter 10 und 11, wobei sich der eine Endschalter 10 nahe der Versorgungeleitung 3 und der andere Endschalter 11 nahe der Versorgungsleitung 4 innerhalb der Schaltung befinden. Der Endschalter 10 weist einen Öffnerkontakt 12 und einen Schließerkontakt 13 auf, die in Reihe zueinander zwischen den Versorgungsleitungen 3 und 4 bzw. den Spannungspotentialen liegen, was in Figur 1 deutlich wird, wenn man den Stromlauf von dem Leitungspunkt 55 über 56 zu 57 verfolgt. Dementsprechend besitzt auch der Endschalter 11 einen Schließerkontakt 14 und einen Öffnerkontakt 15, die ihrerseits wiederum in Reihe zueinander zwischen den Versorgungsleitungen 3 und 4 bzw. den Spannungspotentialen liegen. Hier ist in Figur 1 der Stromlauf von dem Leitungspunkt 58 über 59 zu 60 zu verfolgen.

Die Schaltung weist weitere zwei Relais 16 und 21 auf, wobei sich das Relais 16 schaltungsmäßig nahe der Versorgungsleitung 3 und das Relais 21 nahe der Versorgungsleitung 4 befinden. Das Relais 16 enthält die Schließerkontakte 17 und 20 sowie die Öffnerkontakte 18 und 19. Das Relais 21 enthält die Schließerkontakte 22, 23 und 25 sowie den Öffnerkontakt 24. Die Kontakte sind in den in Figur 1 dargestellten Leitungen, wie

2

nachfolgend noch näher erläutert ist, vorgesehen. Die Schaltung besitzt ferner eine Leitungsbrücke 26, die vorteilhafterweise abnehmbar ist bzw. entfernt werden kann und die zur Überbrückung einer Automatik-Start-Taste 43 dient. Die Ausgänge der Schaltung sind mit den Bezugszeichen 27 und 28 versehen. Eingangs der Versorgungsleitung 3 sitzt eine Sicherung 29, zu der eine Glimmlampe Glühlampe 30 parallel geschaltet ist. Weitere Glimmlampen 31 und 32 sind parallel zu den Ausgängen 27 und 28 geschaltet.

Die Ausgänge 27 und 28 stehen über weitere Leitungen 50, 51 mit weiteren externen Relais 33 und 34 bzw. Schützen in Verbindung, die ihrerseits über die Leitung 52 an die Versorgungsleitung 4 angeschlossen sind. Das Relais 33 enthält den Öffnerkontakt 35 und die beiden Schließerkontakte 36 und 37. Das Relais 34 enthält den Öffnerkontakt 38 und die beiden Schließerkontakte 39 und 40.

Im linken unteren Teil der Figur 1 ist die Ansteuerung dargestellt, und zwar handelt es sich in diesem Ausführungsbeispiel um eine Ventilansteuerung mit elektrisch betätigten Ventilen 41 und 42. Die elektrisch betätigten Ventile sind an die Versorgungsleitungen 53 und 54 unter Zwischenschaltung von Kontakten angeschlossen. Dabei ist wichtig, daß der Schließerkontakt 36 des Relais 33 bzw. Schützes sowie der Schließerkontakt 39 des Relais 34 bzw. Schützes zwischen der Versorgungsleitung 53 und dem Ventil 41 und der Schließerkontakt 37 des Relais 34 sowie der Schließerkontakt 40 des Relais 34 zwischen der Versorgungsleitung 54 und dem Ventil 42 vorgesehen sind.

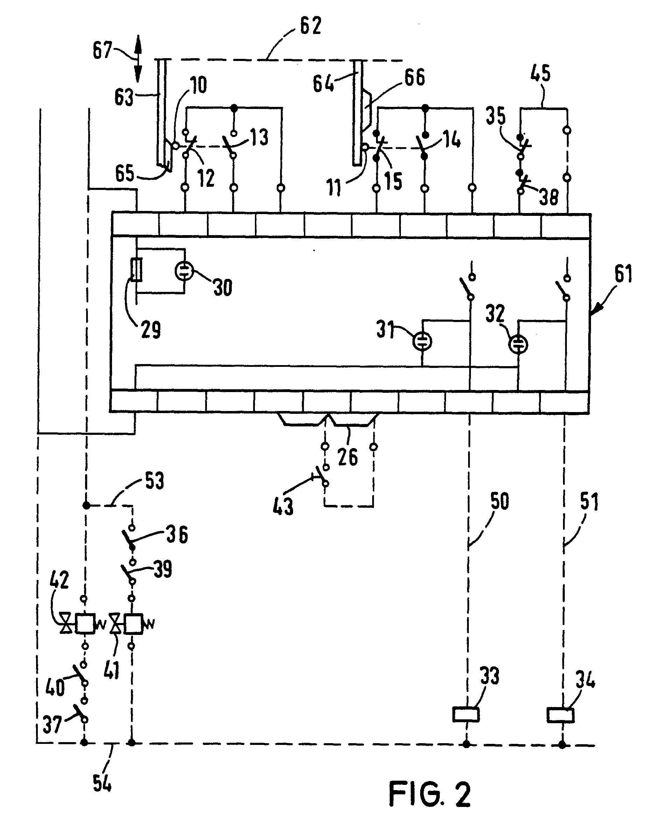

Figur 2 veranschaulicht eine Übersichtsschaltung, wobei für gleiche oder gleichwirkende Teile die gleichen Bezugszeichen wie in Figur 1 verwendet worden sind. Gemäß Figur 2 ist der wesentliche Teil der Schaltung aus Figur 1 in einem gemeinsamen Gerätegehäuse 81 untergebracht. Im oberen Teil der Figur 2 ist ein Ausführungsbeispiel schematisch dargestellt, und zwar ein Schutzgitter 62, welches in Richtung des Pfeiles 87 bewegbar ist. An dem Schutzgitter 82 sitzen Anfahrkurven 63 und 84, die Nocken 85 und 88 tragen, die ihrerseits etwas zueinander versetzt und so angeordnet sind, daß eine antivalente Betätigung der beiden Endschalter 10 und 11 erfolgt.

Die Wirkungsweise der oben erläuterten Schaltung ist im wesentlichen folgende. Beim Anlegen der Versorgungsspannung an die Anschlüsse 1, 2 bzw. die Versorgungsleitungen 3, 4 und bei unbetätigten Endschaltern 10 und 11 zieht das Relais 5 an. Um den Ausgang 27, 28 durchzuschalten, müssen die Relais 21 und 16 anziehen, bevor die definierte Abfallverzugszeit des Relais 5 abgelaufen ist. Die beiden Endschalter 10 und 11 müssen deshalb mindestens innerhalb von 0,5 Sekunden betätigt sein, wenn die definierte Abfallverzugszeit 0,5 Sekunden beträgt. Das Relais 5 kann nach Anlegen der Versorgungsspannung anziehen, weil der Stromkreis mit den Leitungen 3, 44, 45, 46 bis 4 mit den hierin befindlichen Kontakten 12, 35, 38, 18, 24 und 15 geschlossen ist. Beim Betätigen der beiden Endschalter innerhalb der definierten Abfallverzugszeit öffnen zunächst die Öffnerkontakte 12 und 15 der beiden Endschalter 10 und 11, bevor die Schließer 13 bzw. 14 schließen. Damit können die beiden Relais 16 und 21 anziehen, und zwar zunächst Relais 21 über den Stromkreis von 3 über den geschlossenen Kontakt 7, Leitung 48, den geschlossenen Kontakt 14 des Endschalters 11, Leitung 46 und 47 sowie über die Brücke 26 und den noch geschlossenen Kontakt 19 des Relais 16 bis hin zur Versorgungsleitung 4. Nach dem Anzug des Relais 21 kann auch das Relais 16 anziehen, und zwar über den Stromkreis von 3 Über 7, 14, 46, 47, 6, den nun geschlossenen Kontakt 22 des Relais 21, weiter über Leitung 44, Kontakt 13 des Endschalters 10 und Leitung 49. Wenn nun nach Ablauf der Abfallverzugszeit das Relais 5 abfällt, öffnen die Kontakte 6 und 7 dieses Relais wieder, während die Kontakte 8 und 9 des Relais 5 wieder schließen.

Die Relais 21 und 16 bleiben eingeschaltet, weil nun die parallel zu den Kontakten 6 und 7 angeordneten Kontakte 17 und 23 der Relais 76 bzw. 21 geschlossen sind und aunerdem der Kontakt 22 des Relais 21 ebenfalls geschlossen ist.

In diesem Schaltzustand sind auch die Ausgänge 27, 28 eingeschaltet, und zwar über folgenden Stromkreis ausgehend von 3 über Kontakt 23, Leitung 48, Kontakt 14, Leitungen 46, 47, und nun mit der Aufteilung für den Ausgang 27 über die geschlossenen Kontakte 25 und 20 sowie 8 und für den Ausgang 28 von der Leitung 47 über den wiedergeschlossenen Kontakt 9. Sobald die Ausgäüge 27, 28 eingeschaltet sind, erhalten auch die Relais 33, 34 bzw. Schütze über die Leitungen 50, 51 einerseits und 52 andererseits Spannung und können anziehen, womit auch die wechselseitigen Kontakte 36, 39 und 37, 40 schließen können, so daß schließlich die Ventile 41, 42 elektrisch betätigt werden können.

Das Freigeben nur eines Endschalters 10 oder 11 blockiert soforr den Ausgang 27, 28 des Gerätes und erfordert stets die erneute Betätigung beider Endschalter innerhalb von 0,5 Sekunden, wenn die besagte Abfallverzugszeit für diesen Zeitraum definiert ist. Bei Freigabe des Endschalters 10 öffnet der Kontakt 13, so dan das Relais 16 abfällt, damit die Kontakte 17 und 20 öffnet und damit den Ausgang 27 abschaltet. Entsprechend fällt das Relais 21 ab, wenn der Endschalter 11 freigegeben wird, weil dann der Kontakt 14 öffnet, als Folge davon auch der Kontakt 23, womit beide Ausgänge 27, 2g abgeschaltet sind. Auch wenn nur ein Ausgang abgeschaltet wird, fällt das entsprechende Relais 33 oder 34 bzw. Schütz ab, womit in jedem Falle beide Ventile 41, 42 abgeschaltet werden.

Die oben erläuterte Schaltung bringt eine Reihe von wesentlichen Vorteilen und Eigenschaften mit sich. Durch die besondere Anordnung der Endschalterkontakte innerhalb der Schaltung ergeben sich folgende besonderen Überwachungseigenschaften.:

a) Je Endschalter 10 bzw. 11 liegen die zugehörigen Kontakte 12, 13 bzw. 14, 15, wie oben bereits erläutert wurde, in Reihe zueinander. Eine fehlerhafte Brückung eines Kontaktes 13 oder 14 würde sofort und die fehlerhafte Brückung eines Kontaktes 12 oder 15 spätestens bei Betätigung des entsprechenden Endschalters 10 oder 11 zum Kurzschluß zwischen den Versorgungsleitungen 3, 4 führen. Solange die Endschalter 10, 11 mit

3

den zugehörigen Kontakten in Ordnung sind, ist ein Kurzschluß nicht zu befürchten, weil der Offnerkontakt 12 bzw. 15 stets früher öffnet, als der Kontakt 13 bzw. 14 schließen kann.

b) Bei anftreten eines Kurzschlusses infolge eines Fehlers schmilzt die Sicherung 29 und speichert den Fehler selbst dann noch, wenn er bereits korrigiert wurde, das heißt auch sporadisch auftretende Fehler werden erkannt und gespeichert, bis die Sicherung 29 ersetzt wurde. Dadurch ergibt sich eine Einschaltsperre. Sobald die Sicherung 29 geschmolzen ist, leuchtet die Glühlampe 30 auf, womit der Sicherungsausfall optisch sichtbar wird. Infolge des hohen Widerstandes der parallel geschalteten Glimmlampe 30 erreicht der in diesen Nebenkreis der Glimmlampe fließende Strom nicht aus, um ein Anziehen des Relais zu bewirken. Dies gilt auch für die Anzeigen der Glimmiampen 31 und 32 an den Ausgängen 27 und 28.

c) Eine fehlerhafte Unterbrechung an einem der Kontakte 13 oder 14 würde dazu führen, daß die Relais 16 und 21 niemals an Spannung gelangen könnten, selbst bei ordnungsgemäßer Betätigung der Endschalter 10 und 11. Falls die Endschalter 10 und 11 bereits betätigt waren, wird die Erregung der Spulen der Relais 16 und 21 sofort abgebaut, so daß diese Relais abfallen würden. Damit wäre dann auch der Geräteausgang 27, 28 offen.

d) Die fehlerhafte Unterbrechung eines der Kontakte 12 oder 15 würde die Erregung der Spule des Relais 5 verhindern. Das angezogene Relais 5 ist aber Voraussetzung für die Einschaltung der Relais 16 und 21. Der Geräteausgang würde wieder offenbleiben.

e) Eine fehlerhafte Unterbrechung an den Kontakten 13 oder 14 bei nichtbetätigten Endschaltern sowie die fehlerhafte Unterbrechung an den Kontakten 12 oder 15 während der Endschalterbetätigung sind ohne Bedeutung, weil sie dem jeweiligen betriebmäßigen Zustand entspricht. Diese Fehler werden aber, wie unter den beiden vorausgegangenen Punkten erläutert wurde, sofort erfaßt, sobald eine Zustandänderung der Endschalterbetätigung eintritt.

f) Die Antivalenz in der Kontaktanordnung in bezug auf den Ausgang ermöglicht auch, die Abfallverzögerungszeit des Relais 5 zu kontrollieren. Verändert sich nämlich die Zeit nach Null hin, gelingt es nicht mehr, innerhalb der Abfallverzögerungszeit von 5 beide Endschalter zu betätigen. Das Relais 16 kann somit nicht anziehen und der Ausgang bleibt offen. Verändert sich dagegen die Zeit nach Unendlich hin, bleibt das Relais 5 im angezogenen Zustand. Der Ausgang bleibt damit ebenfalls offen, weil dann die Kontakte 8 und 9 geöffnet bleiben.

g) Ein Spannungsausfall würde im Betriebszustand die Selbsthaltung des Relais 16 auflösen. Das bedeutet:

Nullspannungssicherheit, das heißt bei Spannungswiederkehr ist der normale Betriebszustand nicht automatisch wieder hergestellt.

Wiedereinschaltsperre, das heißt bevor der Betrieb fortgesetzt werden kann, müssen beide Endschalter 10 und 11 freigegeben und beide erneut innerhalb der definierten Abfallverzugszeit des Relais 5 von beispielsweise 0,5 Sekunden betätigt werden.

Wenn man die oben erläuterte Leitungsbrücke 26 entfernt, kann die Automatik-Start-Taste 43 zur Wirkung kommen. Durch diese Automatik-Start-Taste kann man die Ausgangskanäle bzw. Ausgänge 27, 28 kontrolliert einschalten, sofern die Endschalter 10 und 11 vorher innerhalb der Abfallverzugszeit des Relais 5 betätigt wurden. Das Öffnen nur eines Endschalters bzw. ein Spannungsausfall erfordern die erneute gleichzeitige Betätigung der Endschalter, gemäß Figur 2 beispielsweise das Öffnen des Gitters 62 und das Wiederschließen und es ist der nochmalige Befehl "Automatik-Start" durch Betätigen der besagten Taste erforderlich. Die Schaltung ergibt also eine Nullspannungssicherheit auch in der Uberwachung.

Der Rückführkreis 45 zwischen den Klemmen 68 und 69 sorgt für die Überwachung der durch die beiden Ausgangskanäle bzw. Ausgänge 27, 28 angesteuerten Relais 33, 34 oder Schütze. Beim Schließen des Schutzgitters 62 müssen beide Relais 33, 34 abgefallen sein, das heißt der Rückführkreis 45 mit den beiden Kontakten 35 und 38 muß im Augenblick der gleichzeitigen Betätigung der Endschalter 10 und 11 geschlossen sein, anderenfalls ist kein brauchbares Ausgangssignal zu erwarten. Der Rückführkreis 45 kann nicht nur zur Überwachung der beiden Relais 33, 34 bzw. Schütze und somit der elektrisch betätigten Ventile 41, 42 genutzt werden, sondern auch zur Überwachung anderer externer Schaltgeräte.

Die nachfolgende Fehleranalyse zeigt, daß die beschriebene Schaltung eine vollständige Überwachung der Funktionstüchtigkeit und der Leitungen gegen Überbrückung, Unterbrechung oder gar Manipulation ergibt.

| Laufende Nummer | Fehler | Folge |
|---|---|---|
| 1. | Relais 5 bleibt eingeschaltet | Ausgänge 27 und 28 erhalten keine Spannung |
| 2. | Relais 5 schaltet nicht ein | Relais 16 und Ausgang 27 erhalten keine Spannung |

4

| Laufende Nummer | Fehler | Folge |
|---|---|---|
| 3. | Relais 16 bleibt eingeschaltet | Relais 21 kann nicht einschalten und Ausgang 27 erhält keine Spannung |
| 4. | Relais 16 schaltet nicht ein | Ausgang 27 erhält keine Spannung |
| 5. | Relais 21 bleibt eingeschaltet | Relais 5 und 16 und Ausgang 27 erhalten keine Spannung |
| 6. | Relais 21 schaltet nicht ein | Ausgang 27 erhält keine Spannung |
| 7. | Zwischen Leitungspunkten 55 und 56 | Kurzschluß |
| 8. | Zwischen Leitungspunkten 55 und 57 | Kurzschluß |
| 9. | Zwischen Leitungspunkten 55 und 60 | Kurzschluß |
| 10. | Zwischen Leitungspunkten 55 und 59 | Kurzschluß |
| 11. | Zwischen Leitungspunkten 55 und 58 | ohne Bedeutung |
| 12. | Zwischen Leitungspunkten 56 und 57 | Kurzschluß |
| 13. | Zwischen Leitungspunkten 56 und 60 | Kurzschluß |
| 14. | Zwischen Leitungspunkten 56 und 59 | Kurzschluß |
| 15. | Zwischen Leitungspunkten 56 und 58 | Kurzschluß |
| 16. | Zwischen Leitungspunkten 57 und 60 | ohne Bedeutung |
| 17. | Zwischen Leitungspunkten 57 und 59 | Kurzschluß |
| 18. | Zwischen Leitungspunkten 57 und 58 | Kurzschluß |
| 19. | Zwischen Leitungspunkten 60 und 59 | Kurzschluß |
| 20. | Zwischen Leitungspunkten 60 und 58 | Kurzschluß |

| Laufende Nummer | Fehler | Folge |
|---|---|---|
| 21. | Zwischen Leitungs- punten 59 und 58 | Kurzschluß |
| 22. | Unterbrechung nach Leitungspunkt 55 | Ausgang 27 erhält keine Spannung |
| 23. | Unterbrechung am Leitungspunkt 56 | Ausgang 27 erhält keine Spannung |
| 24. | Unterbrechung zum Leitungspunkt 57 | Ausgang 27 erhält keine Spannung |
| 25. | Unterbrechung zum Leitungspunkt 60 | Ausgang 27 erhält keine Spannung |
| 26. | Unterbrechung zum Leitungspunkt 59 | Ausgänge 27 und 28 erhalten keine Spannung |
| 27. | Unterbrechung zum Leitungspunkt 58 | Ausgänge 27 und 28 erhalten keine Spannung |
| 28. | Relais 33 bleibt eingeschaltet | Rückführkreis 45 bleibt offen und Relais 5, 16 und Ausgang 27 erhalten keine Spannung |
| 29. | Relais 33 schaltet nicht ein | Ventile 41 und 42 können nicht ein- schalten |
| 30. | Relais 34 bleibt eingeschaltet | Rückführkreis 45 bleibt offen und Relais 5 und 16 sowie Ausgang 27 erhalten keine Spannung |
| 31. | Relais 34 schaltet nicht ein | Ventile 41 und 42 können nicht ein- schalten |

Es sei noch besonders hervorgehoben, daß bei Betätigung des Endschalters 10 am Schaltpunkt 56 und bei Betätigung des Endschalters 11 am Schaltpunkt jeweils Potentialwechsel stattfinden, und zwar bei 56 von 3 nach 4 und bei 59 von 4 nach 3. Diese Potentialwechsel machen sich durch die Abfallverzugszeit des Relais 5 schaltungsmäßig nicht bemerkbar. Die Potentialwechsel sind aber entscheidend einmal für die Kurzschlußempfindlichkeit der Endschalter im Fehlerfall, ferner für die Selbsthaltefähigkeit der Relais 16 und 21 während des Betriebs, außerdem für die Kontrolle der Abfallverzugszeit des Relais 5 und schließlich für die Fehlerbetrachtung, nämlich die ungewollte externe Verbindung zwischen den Scheltpunkten 56 und 59.

**Patentansprüche**

1. Schaltungseinrichtung zur aktiven Kontrolle von paarig angeordneten Endschaltern (10, 11), welche der statischen oder dynamischen Überwachung von Absicherungseinrichtungen an Gefahrenstellen, wie Schutzgitter (62), mechanische Abschirmungen, Barrieren od. dgl. dienen, wobei die beiden Endschalter (10, 11), ein Relais (5) mit definierter Abfallverzugszeit und weitere Relais (16, 21) zwischen Versorgungsleitungen (3, 4) den Ausgang (17, 28) nur dann durchgehalten, wenn beide Endschalter (10, 11) innerhalb der Abfallverzugszeit betätigt sind, dadurch gekennzeichnet, daß der eine Endschalter (10) und das eine Relais (16) schaltungsmäßig nahe der einen Versorgungsleitung (3) und der andere Endschalter (11) und das andere Relais (21) nahe der anderen Versorgungsleitung (4) vorgesehen sind, daß jeder Endschalter (10, 11) einen Öffnerkontakt (12, 15) und einen Schlienerkontakt (13, 14) aufweist, und daß diese Öffner- und Schließerkontakte (12, 15; 13, 14) derart geschaltet sind, daß bei jeder Betätigung der Endschalter (10, 11) ein Potentialwechsel in bezug auf das Relais (5) mit der definierten Abfallverzugszeit stattfindet.

2. Schaltungseinrichtung nach Anspruch 1, dadurch gekennzeichnet, dan die Öffnerkontakte (12, 15) und die Schlienerkontakte (13, 14) jedes Endschalters (10, 11) in Reihe zueinander geschaltet sind.

3. Schaltungseinrichtung nach Anspruch 1 oder 2, dadurch gekennzeichnet, daß die zusammengehörenden Öffner- und Schließerkontakte (12, 15; 13, 14) derart ausgebildet sind, dan bei Betätigen der Endschalter (10, 11) die Öffnerkontakte (12, 15) eher öffnen, als die Schliesserkontakte (13, 14) schließen.

4. Schaltungseinrichtung nach einem der vorhergehenden Ansprüche, dadurch gekennzeichnet, daß eine durch eine Leitungsbrücke (26) überbrückbare Automatik-Start-Taste (43) vorgesehen ist, welche kontrollierte Einschaltung des Ausgangs (27, 28) gestattet.

5. Schaltungseinrichtung nach einem der vorhergehenden Ansprüche, dadurch gekennzeichnet, daß zwei Ausgänge (27, 28) vorgesehen sind, an welche zwei weitere Relais (33, 34) oder Schütze angeschlossen sind, die der eigentlichen Ansteuerung dienen.

6. Schaltungseinrichtung nach Anspruch 5, dadurch gekennzeichnet, daß die Relais (33, 34) je zwei Schließerkontakte (36, 37; 39, 40) aufweisen, welche wechselseitig zwischen Versorgungsleitungen (53, 54) und zwei anzusteuernden, elektrisch betätigbaren Ventilen (41, 42) schaltungsmäßig angeordnet sind.

7. Schaltungseinrichtung nach Anspruch 5 oder 6, dadurch gekennzeichnet, daß in dem Stromkreis (44, 46), in dem sich das Relais (5) mit definierter Abfallverzugszeit befindet, ein Rückführkreis (45) mit zwei Öffnerkontakten (35, 38) der beiden weiteren Relais (33, 34) vorgesehen ist,

8. Schaltungseinrichtung nach einem der vorhergehenden Ansprüche, dadurch gekennzeichnet, daß die Abfallverzugszeit des Relais (5) zu 0,3 sec.bis 0,5 sec. gewählt ist.

9. Schaltungseinrichtung nach einem der Ansprüche 5 bis 8, dadurch gekennzeichnet, daß in der einen Versorgungsleitung (3) eine Sicherung (29) vorgesehen und hierzu eine Glühlampe (30) parallel geschaltet ist, und daß zu den beiden Ausgängen (27, 28) weitere Glühlampen (31, 32) parallel geschaltet sind.

**Claims**

1. Switching device for the active control of limit switches (10, 11) arranged in pairs, which serve for the static or dynamic monitoring of protection devices at danger points, such as protection gratings (62), mechanical shields, barriers or the like, in which case the two limit switches (10, 11), a relay (5) with a defined drop-out delay time and further relays (16, 21) are connected between supply lines (3, 4) so that the relays (16, 21) only switch the output (27, 28) through when both limit switches (10, 11) are actuated within the drop-out delay time, characterised in that one limit switch (10) and one relay (16) are provided in the circuit close to one supply line (3) and the other limit switch (11) and the other relay (21) are provided close to the other supply line (4), that each limit switch (10, 11) comprises a normally-closed contact (12, 15) and a normally-open contact (13, 14) and that these normally-closed and normally-open contacts (12, 15); (13, 14) are connected so that at the time of each actuation of the limit switches (10, 11), a change of potential takes place with respect to the relay (5) with the defined drop-out delay time.

2. Switching device according to Claim 1, characterised in that the normally-closed contacts (12, 15) and the normally-opened contacts (13, 14) of each limit switch (10, 11) are connected in series with respect to each other.

3. Switching device according to Claim 1 or 2, characterised in that the associated normally-closed and normally-opened contacts (12, 15); (13, 14) are constructed so that when the limit switches (10, 11) are actuated, the normally-closed contacts (12, 15) open before the normally-opened contacts (13, 14) close.

4. Switching device according to one of the preceding Claims, characterised in that an automatic start button (43) able to be bridged by a line bridge (26) is provided, which automatic start button allows controlled switchingin of the output (27, 28).

5. Switching device according to one of the preceding Claims, characterised in that two outputs (27, 28) are provided, to which two further relays (33, 34) or contactors are connected, which serve for the actual triggering.

6. Switching device according to Claim 5, characterised in that the relays (33, 34) each comprise two normally-opened contacts (36, 37); (39, 40), which in the circuit are located alternately between supply lines (53, 54) and two electrically operated valves (41, 42) to be triggered.

7. Switching device according to Claim 5 or 6, characterised in that in the circuit (44, 46), in which the relay (5) with a definite drop-out delay time is located, a feed back loop (45) with two normally-closed contacts (35, 38) of the two other relays (33, 34) is provided.

8. Switching device according to one of the preceding Claims, characterised in that the drop-out delay time of the relay (5) is chosen to be between 0.3 and 0.5 seconds.

9. Switching device according to one of Claims 5 to 8, characterised in that provided in one supply line (3) is a fuse (29) and a light bulb (30) is connected in parallel therewith and that further light bulbs (31, 32) are connected in parallel with the two outputs (27, 28).

**Revendications**

1. Dispositif à circuit pour un contrôle actif de contacteurs limiteurs (10, 11) disposés par paires, qui servent à une surveillance statique ou dynamique de dispositifs de sécurité installés dans des zones dangereuses, comme des grilles de protection (62), des écrans mécaniques, des barrières ou analogues, les deux contacteurs limiteurs (10 11), un relais (5) ayant un temps défini de retardement de coupure et d'autres relais (16, 21) étant branchés entre des conducteurs d'alimentation (3, 4) de telle sorte que les relais (16, 21) ne laissent passer un courant à la sortie (27, 28) que lorsque les deux contacteurs limiteurs (10, 11) sont actionnés pendant le temps de retardement de coupure, caractérisé en ce qu'un des contacteurs limiteurs (10) et un des relais (16) sont placés dans le circuit à proximité d'un des conducteurs d'alimentation (3) tandis que l'autre contacteur limiteur (11) et l'autre relais (21) sont placés à proximité, de l'autre conducteur d'alimentation (4), en ce que chaque contacteur limiteur (10, 11) comporte un contact d'ouverture (12, 15) et un contact de fermeture (13, 14) et en ce que ces contacts d'ouverture et de fermeture (12, 15; 13, 14) sont commandés de telle sorte que, a chaque actionnement du contacteur limiteur (10, 11), il se produise une variation de potentiel en relation avec le relais (5) ayant le temps défini de retardement de coupure.

2. Dispositif à circuit selon la revendication 1, caractérisé en ce que les contacts d'ouverture (12, 15) et les contacts de fermeture (13, 14) de chaque contacteur limiteur (10, 11) sont branchés mutuellement en série.

3. Dispositif a circuit selon la revendication 1 ou 2, caractérisé en ce que les contacts d'ouverture et de fermeture associés (12, 15; 13, 14) sont agencés de telle sorte que lors d'un actionnement des contacteurs limiteurs (10, 11), les contacts d'ouverture (12, 15) s'ouvrent avant la fermeture des contacts de fermeture (13, 14).

4. Dispositif à circuit selon une des revendications précédentes, caractérisé en ce qu'il est prévu une touche de démarrage automatique (43) pouvant être court-circuitée par un conducteur de pontage (26) et qui permet un enclenchement contrôlé de la sortie (27, 28).

5. Diapositif à circuit selon une des revendications précédentes, caractérisé en ce qu'il est prévu deux sorties (27, 28) auxquelles sont reliés deux autres relais (33, 34) ou disjoncteurs qui assurent la commande proprement dite.

6. Dispositif à circuit selon la revendication 5, caractérisé en ce que les relais (33, 34) comportent chacun deux contacts de fermeture (36, 37); 39, 40), qui sont disposés de façon alternée entre les conducteurs d'alimentation (53, 54) et deux vannes (41, 42) pouvant être actionnées électriquement et qui doivent être commandées par le circuit.

7. Dispositif à circuit selon la revendication 5 ou 6, caractérisé en ce qu'il est prévu, dans la voie électrique (44, 46) dans laquelle se trouve le relais (5) ayant un temps défini de retardement de coupure, un circuit de retour (45) comportant deux contacts d'ouverture (35, 38) des deux autres relais (33, 34).

8. Dispositif à circuit selon une des revendications précédentes, caractérisé en ce que le temps de retardement de coupure du relais (5) est choisi entre 0,3 seconde et 0,5 seconde.

9. Dispositif à circuit selon une des revendications 5 à 8, caractérisé en ce qu'il est prévu dans un des conducteurs d'alimentations (3) un fusible (29) auquel est branchée en parallèle une lampe à incandescence (30) et en ce que d'autres lampes à incandescence (31, 32) sont branchées en parallèle avec les deux sorties (27, 28).

FIG.1

FIG. 2